(19) Europäisches Patentamt
European Patent Office
Office européen des brevets

(11) **EP 2 815 489 B1**

(12) **FASCICULE DE BREVET EUROPEEN**

(45) Date de publication et mention
de la délivrance du brevet:
**01.04.2020 Bulletin 2020/14**

(51) Int Cl.:
***H02K 41/03*** *(2006.01)*

(21) Numéro de dépôt: **13708209.5**

(22) Date de dépôt: **14.02.2013**

(86) Numéro de dépôt international:
**PCT/FR2013/050296**

(87) Numéro de publication internationale:
**WO 2013/121147 (22.08.2013 Gazette 2013/34)**

(54) **ACTIONNEUR A ENTRAINEMENT DIRECT COMPACT GENERANT UNE FORCE CONSTANTE**

KOMPAKTER DIREKTANTRIEBSAKTUATOR MIT ERZEUGUNG EINER KONSTANTEN KRAFT

COMPACT DIRECT-DRIVE ACTUATOR GENERATING A CONSTANT FORCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.02.2012 FR 1251390**

(43) Date de publication de la demande:
**24.12.2014 Bulletin 2014/52**

(73) Titulaire: **Moving Magnet Technologies
25000 Besançon (FR)**

(72) Inventeurs:
• **RIOS-QUESADA, Javier
F25000 Besançon (FR)**
• **LOUSSERT, Guillaume
F-25000 Besançon (FR)**
• **DELBAERE, Michael
F-25720 Avanne (FR)**

(74) Mandataire: **IP Trust
2, rue de Clichy
75009 Paris (FR)**

(56) Documents cités:
**US-A- 4 924 123        US-A1- 2004 263 003
US-A1- 2005 242 675     US-A1- 2008 220 930**

**Description**

**DOMAINE TECHNIQUE DE L'INVENTION**

La présente invention se rapporte au domaine des actionneurs électromagnétiques sans contact à aimants mobiles, et plus particulièrement ceux présentant une force constante sur la course, même sous forts courants provoquant une saturation du circuit magnétique.

**ETAT DE LA TECHNIQUE ANTERIEURE**

On connait dans l'état de la technique des technologies d'actionneur sans contact telles que décrites dans le brevet US04195277. Cet actionneur repose sur l'emploi d'une armature mobile composée d'un aimant unipolaire. L'ensemble mobile fait face à une structure statorique constituée d'un circuit en « C » présentant une bobine en son sein. Cette structure présente l'avantage d'une variation constante de flux magnétique dû à l'aimant à travers la bobine au cours du déplacement de l'aimant. Ce gradient de flux par unité de déplacement est appelé facteur de force de l'actionneur ; multiplié par la force magnétomotrice de la bobine il permet d'obtenir la force générée par le dit actionneur. Cette force est alors constante pour un facteur de force constant et un courant donné. Cependant la structure proposée n'est pas adaptée à des actionneurs devant présenter un facteur de force élevé du fait de l'emploi d'un seul pôle sur l'aimant mobile et de 2 pôles au stator.

On trouve ainsi dans l'état de l'art, des structures à 3 pôles statoriques notamment celui de la demanderesse WO09016109A1 qui permettent d'améliorer le facteur de force grâce à l'emploi de deux pôles sur l'aimant mobile. Si on souhaite créer un actionneur présentant une force importante par unité de puissance électrique, une importante force magnétomotrice de bobine est nécessaire en plus d'un facteur de force important. Cela conduit donc à une bobine de taille importante. Cette structure présente alors l'inconvénient d'un encombrement axial très important du fait de l'emploi de trois pôles aux stators auxquels viennent s'ajouter 2 fois la hauteur des bobines. Selon les enseignements de ce brevet, la course d'un tel actionneur est alors inférieure à la moitié de la différence entre la hauteur totale du circuit magnétique comportant la bobine et la hauteur totale des parties aimantées ($2.Y_A$). Ainsi par exemple, pour une hauteur totale de circuit magnétique de 52 mm et une hauteur totale des parties aimantées de 37 mm, un tel actionneur présenterait une course de seulement 7.5 mm lui permettant d'obtenir une force constante sur cette course.

On connaît également le brevet de la demanderesse EP00607354B1 proposant de palier à ce défaut d'encombrement par l'emploi d'un logement dans la partie statorique dans lequel la bobine est enchâssée. L'encombrement axial de la structure devient alors bien plus réduit puisqu'il est équivalent à la hauteur additionnée des trois pôles statoriques à laquelle s'ajoute deux fois la distance entre le pôle central et le pôle latéral. Cette dernière distance se réduisant cette fois ci à la moitié de l'entrefer E qui correspond à la somme de l'épaisseur d'aimant et du jeu mécanique entre aimant et surface du stator. Selon l'enseignement de ce brevet, le pôle central doit posséder une hauteur ($Y_C$) égale à la course augmentée de la distance E. La largeur des pôles latéraux ($Y_L$) étant supérieure à la largeur du pôle central. Ainsi dans une hauteur de 52 mm, l'enseignement du brevet nous oriente vers un actionneur de course maximale 14 mm ce qui représente une réelle amélioration par rapport au brevet WO09016109A1. La contrepartie directe est qu'il en résulte une proximité entre le pôle centrale et les pôles latéraux encourageant alors les fuites de flux magnétique entre pôles statoriques. Dans l'objectif de réduire le flux de fuites entre pôles, l'homme de métier a alors le réflexe de chanfreiner les pôles, ce que décrit également le brevet EP00607354B1.

On trouve par exemple ces actionneurs dans des applications automobiles dans lesquelles on apprécie le caractère constant de la force sur la course ainsi que la proportionnalité au courant de la force. Ainsi dès lors qu'on souhaite réguler le positionnement d'une vanne pour ajuster le débit d'un fluide (exemple des vannes de recirculation des gaz d'échappements) ou réguler le positionnement d'une pédale pour rendre cette dernière active et capable de transmettre une information au conducteur. La problématique d'encombrement prend tout son sens dans ces environnements exigus dans la mesure où chaque millimètre gagné est précieux pour autoriser l'implantation de l'actionneur.

Cependant bien que ce dernier actionneur cité présente l'avantage de proposer des règles de dimensionnement d'un actionneur compact pour générer une force constante sur la course en régime nominal, il présente l'inconvénient de ne pas être adapté à des problématiques d'actionneurs compacts à courses élargies aptes à générer une force constante sur toute sa course en particulier pour des régimes de saturation élevés.

On connaît également dans l'état de la technique la demande de brevet américaine US2008/220930 décrivant un actionneur linéaire comprenant des d'aimants permanents tubulaires disposés autour d'un noyau d'induit pour un mouvement axial dans un stator tubulaire lors de l'excitation de bobines concentriques disposés en liaison avec l'induit comme décrit dans le préambule de la revendication 1. Les aimants permanents sont séparés par un entrefer.

Cette solution présente l'inconvénient d'un encombrement et d'une caractéristique de force médiocre.

On connaît aussi la demande de brevet américain US2005242675 décrivant des moteurs rotatifs ou linéaires, présentant un ensemble d'aimants séparés par un entrefer et supportés par une culasse mobile.

On connaît encore le brevet américain US4924123 décrivant un générateur linéaire produisant une tension proportionnelle à la vitesse d'un élément mobile ou rotor et permettre à l'élément mobile d'être déplacé sans à-coup.

On connaît enfin la demande de brevet US2004263003 décrivant un moteur linéaire comprenant au moins une section de matériau magnétique doux et au moins un aimant permanent aligné dans une direction axiale du dispositif de déplacement, dans lequel un vecteur de polarisation dudit au moins un aimant permanent est orienté axialement.

## EXPOSE DE L'INVENTION

La présente invention vise donc à proposer un actionneur à aimants mobiles selon la revendication 1. Les modes de réalisation préférés sont décrits dans les revendications dépendantes.

L'invention est exposée dans le jeu de revendications annexé. Les modes de réalisation et/ou les exemples de la description suivante qui ne sont pas couverts par les revendications annexées sont considérés comme ne faisant pas partie de la présente invention.

## BREVE DESCRIPTION DES FIGURES

L'invention sera mieux comprise à la lecture de la description d'un exemple de réalisation non limitatif, se référent aux dessins annexés où :

- La figure 1 présente une vue schématique de l'actionneur selon le mode de réalisation préféré en vue de coupe définissant les principaux paramètres géométriques.
- La figure 2 présente une vue schématique de l'actionneur selon le mode de réalisation préféré en vue de coupe définissant les principales dimensions.
- La figure 3 présente une vue schématique de l'actionneur selon le mode de réalisation préféré en vue de coupe, avec l'organe mobile dans une position de sa course permettant de mieux visualiser l'une des règles dimensionnelles de l'invention.
- La figure 4 présente une vue schématique de l'actionneur selon le mode de réalisation préféré en vue de coupe, avec l'organe mobile en fin de course.
- La figure 5 présente une vue détaillée de l'actionneur selon le mode de réalisation préféré en vue de coupe.
- La figure 6 présente une courbe schématique d'évolution de la force en fonction de la position et de la puissance.
- La figure 7 présente une vue schématique en coupe de l'actionneur selon un mode de réalisation secondaire.
- La figure 8 présente une vue schématique en coupe de l'actionneur selon un mode de réalisation angulaire.
- La figure 9 présente une vue schématique en coupe de l'actionneur selon un autre mode de réalisation linéaire.
- La figure 10 présente une vue schématique d'un actionneur suivant une réalisation périphérique.

## DESCRIPTION DETAILLEE DES MODES DE REALISATION

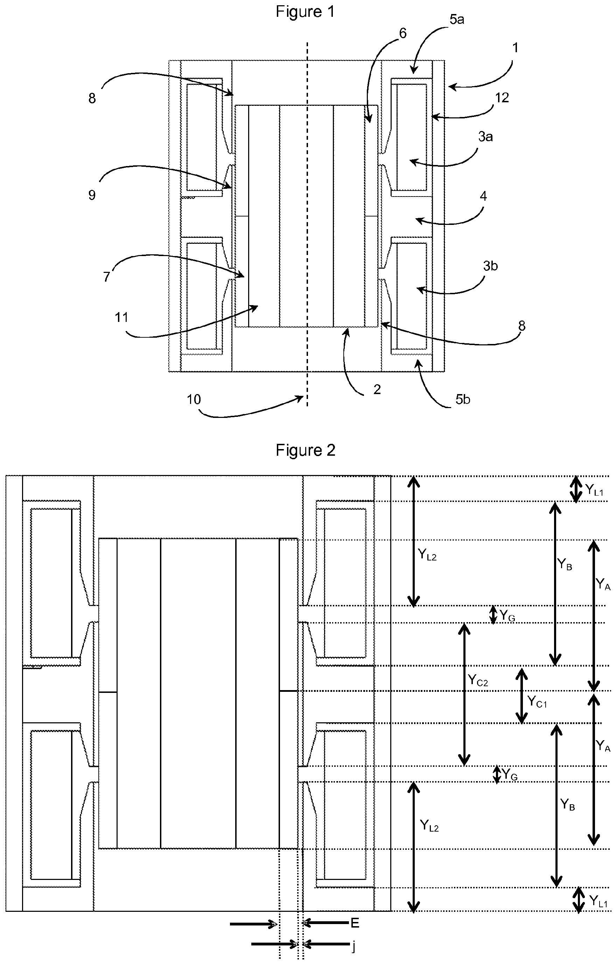

Les figures 1 et 2 représentent de manière schématique un actionneur selon un mode de réalisation préféré.

Cet actionneur est de géométrie axisymétrique autour de l'axe (10) et est constitué d'une structure statorique (1) composée d'un pôle central (4) de largeur axiale $Y_{C1}$ et de deux pôles latéraux (5a, 5b) de largeur $Y_{L1}$. Entre le pôle central (4) et les pôles latéraux (5a, 5b) sont disposées deux bobines d'alimentation électrique (3a, 3b) de largeur axiale $Y_B$. Cette largeur $Y_B$ prend en compte un éventuel corps de bobine supportant ladite bobine (3a, 3b). Le pôle central (4) s'étend sur une direction perpendiculaire à l'axe (10) et est terminé par un prolongement axial (9) présentant une largeur plus importante qu'à la base du pôle central (4) et s'étendant de part et d'autre axialement du pôle central (4) définissant une largeur extrême $Y_{C2}$.

Les pôles latéraux (5a, 5b) sont ici, et préférentiellement, identiques mais peuvent éventuellement présenter une dissymétrie afin d'obtenir un pôle latéral plus large que l'autre. Ils présentent un prolongement (8) axial s'étendant en direction du pôle central (4), définissant une largeur extrême $Y_{L2}$.

Les pôles latéraux (5a, 5b) et le pôle central (4) sont réalisés en matériau ferromagnétique doux et sont reliés entre eux par une culasse (12) elle-aussi en matériau ferromagnétique doux.

Les pôles latéraux (5a, 5b) sont séparés du pôle central (4) par une distance $Y_G$.

L'actionneur présente aussi un organe mobile (2) constitué de deux aimants (6, 7) de largeur identiques $Y_A$ adjacents. Cet organe mobile (2) se déplace sur une course Y. Ils sont préférentiellement aimantés de manière alternée (flux sortant et rentrant) et radiale de façon à ce que le flux magnétique produit soit orienté en direction des pôles. Toute autre aimantation autre que radiale peut être envisagée selon les techniques connues de l'art antérieur notamment pour augmenter localement le niveau de force.

Les aimants (6, 7) présentent une forme tubulaire, mince. Ils sont directement adjacent, sans intervalle d'air ni de fer entre les surfaces frontales de deux aimants (6, 7) consécutifs.

L'aimantation des aimants minces (6, 7) est perpendiculaire à la direction de la course Y sur la zone centrale des aimants minces (6, 7). Elle peut être radiale ou diamétrale.

Cette direction d'aimantation n'est pas nécessairement constante. Elle peut prendre une orientation dont la direction varie à proximité des extrémités de la zone aimantée. Par extrémité de la zone aimantée, on désignera le segment annulaire s'étendant de part et d'autre de la zone aimantée de l'organe mobile, sur moins de 5% de la longueur totale de la zone aimantée. Dans ces deux segments, la direction d'aimantation varie progressivement entre une orientation perpendiculaire à la direction de déplacement de l'organe mobile, vers une direction formant un angle de moins de 90° par rapport à à la direction de déplacement de l'organe mobile.

Ces aimants (6, 7) sont portés par une armature (11), idéalement en matériau ferromagnétique doux afin de refermer le flux magnétique.

En fonction du courant parcourant les bobines d'alimentation (3a, 3b), l'organe mobile se déplace ainsi en regard de la structure statorique (1) selon la direction définit par l'axe (10), en définissant un entrefer (E) délimité par la distance radiale - c'est-à-dire perpendiculairement à l'axe (10)- séparant l'armature (11) de l'ensemble statorique (1) et un jeu mécanique (j) délimité par la distance radiale entre les aimants (6, 7) et la structure statorique (1). Idéalement, l'entrefer (E) et le jeu mécanique (j) sont constants sur la course (Y) de l'actionneur. Selon le sens de courant dans les bobines (3a, 3b), des pôles Nord ou Sud se créent aux niveaux des prolongements (8, 9) qui cherchent ainsi à s'aligner avec les pôles respectivement Sud et Nord des aimants (6, 7).

On définit particulièrement la hauteur des pôles latéraux $Y_{L2}$ comme étant de largeur axiale :

$$Y_{L2}=(2Y_{L1}+2Y_B+Y_{C1}-2Y_G-Y_{C2})/2$$

Cette largeur $Y_{L2}$ des pôles latéraux est inférieure à la largeur $Y_{C2}$ du pôle central (4), les largeurs $Y_{L2}$ et $Y_{C2}$ étant mesurés à la périphérie centrale de la culasse en regard de l'organe mobile.

La largeur $Y_{L2}$ correspond à la hauteur de la première zone polaire entre l'extrémité frontale et la première encoche, mesurée à la surface annulaire interne en regard de l'organe mobile.

La largeur $Y_{C2}$ correspond à la hauteur des zones polaires intermédiaire, ou épanouissement, mesurée à la surface annulaire interne en regard de l'organe mobile.

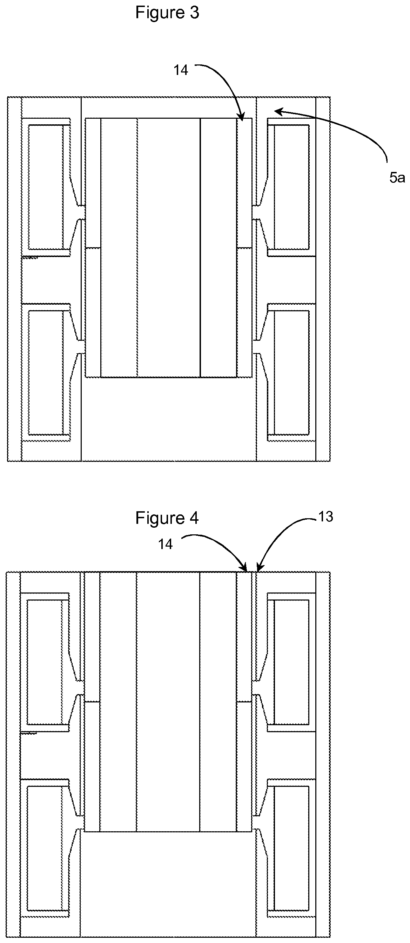

Avantageusement, la largeur $Y_A$ des aimants (6, 7) est égale à la largeur $Y_B$ de la bobine (3a, 3b). Ces deux caractéristiques rendent possible la désaturation du circuit sur la deuxième partie de la course telle que présentée en figure 3. Sur cette figure 3, représentant l'organe mobile (2) au voisinage des ¾ de la course. La transition (16) séparant les deux polarités opposées quittent la zone de vis-à-vis de la section à largeur $Y_{C1}$ du pôle central alors que l'extrémité (14) de l'aimant (6) entre en vis-à-vis avec la section à largeur $Y_{L1}$ du pôle latéral (5a). Cette configuration géométrique essentielle permet de conférer à l'actionneur cette caractéristique étonnante de force constante sur la fin de course même lorsque le courant dans les bobines (3a, 3b) est élevé, la majorité du flux magnétique n'ayant plus à transiter par les prolongements (8) et évitant ainsi une perte de potentiel magnétique.

Le pôle central $Y_{C2}$ est de l'ordre de grandeur de la course Y.

lorsque l'organe mobile (2) a parcouru la course Y, l'extrémité (14) axiale de l'aimant (6) se retrouve alignée axialement avec l'extrémité du pôle latéral (13) comme le montre la figure 4.

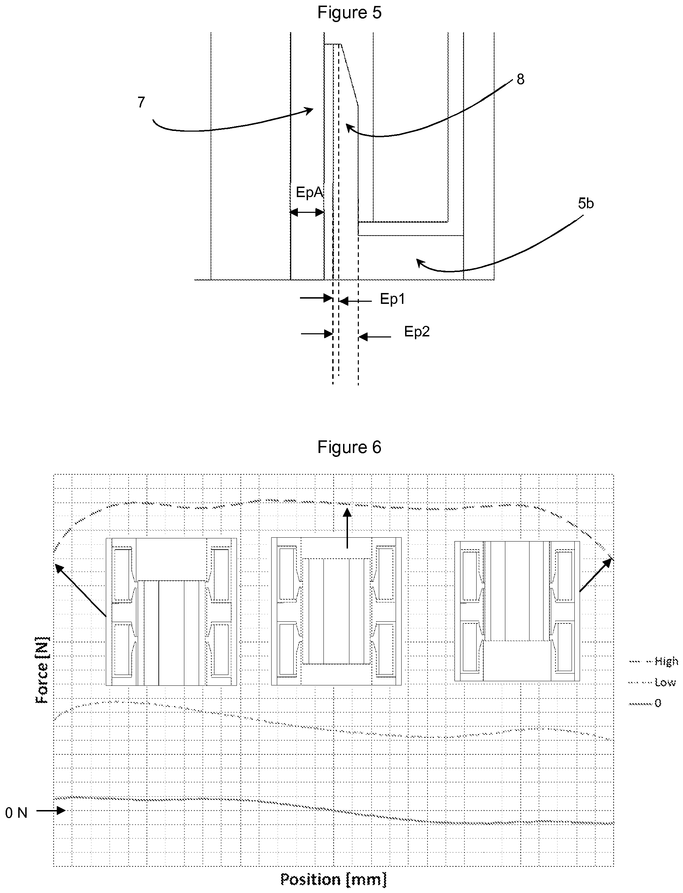

La figure 5 est une vue de détail d'un pôle latéral (5b) qui présente une épaisseur minimale (Ep1) à l'extrémité axiale du prolongement (8) et une épaisseur maximale (Ep2) à la base du prolongement (8). De manière préférentielle, l'épaisseur Ep1 est de l'ordre de grandeur du jeu mécanique j et l'épaisseur Ep2 est de l'ordre de grandeur de l'épaisseur radiale EpA d'aimant (7). L'actionneur selon l'invention présente des épanouissements inhabituellement fins. Les pôles provoquent une saturation locale permettant d'éviter l'affaiblissement du flux magnétique principal en rétablissant un chemin privilégié de passage du flux magnétique par l'entrefer.

La diminution des sections des épanouissements des pôles central (4) et latéraux (5a, 5b) est réalisée dans le but, non pas de simplement diminuer le flux de fuite entre pôles, mais de le réduire fortement à une valeur quasi nulle lorsque la puissance électrique maximale est fournie à l'actionneur.

Sous faible puissance électrique le flux utile n'est pas suffisant pour provoquer de saturation globale du circuit magnétique en fin de course, permettant ainsi de générer une force constante sur l'ensemble de la course.

Quand la puissance électrique maximale est fournie à l'actionneur, la saturation locale des dents a pour conséquence de réduire drastiquement les flux de fuites, permettant de façon surprenante pour l'homme de métier, la dé-saturation globale du circuit magnétique particulièrement en fin de course. Cela a en effet pour résultante de baisser le point de travail du matériau ferromagnétique doux du circuit magnétique qui retrouve un milieu à perméabilité relative plus élevée. Le flux magnétique utile circulant dans ce milieu plus perméable s'en trouve alors augmenté.

La figure 6 représente la courbe de la force mesurée en fonction de la position. Le début de course est sur la gauche de la courbe et la fin de course est sur la droite de la courbe. L'intérêt de cette figure 6 est de souligner que la force en fin de course et la force en début de course sont sensiblement au même niveau que l'on soit à basse (Low) ou haute (high) puissance, c'est-à-dire à courant respectivement faible ou important. On considère qu'une puissance est importante lorsqu'elle est bien supérieure à celle que l'actionneur est capable de supporter en continu sans dégradation par une température trop élevée. La courbe notée (0) est celle correspondant à la force sans courant. Cette force est quasi nulle sur l'ensemble de la course utile définie par l'ensemble de la fenêtre « position [mm] » montrée.

En fin de course, l'extrémité de l'aimant se trouve en vis-à-vis de la pleine section du pôle latéral supérieur permettant de bénéficier de l'effet de dé-saturation du circuit magnétique garantissant une caractéristique linéaire de force en fonction de la position et permettant particulièrement d'obtenir une force identique en début de course et en fin de course.

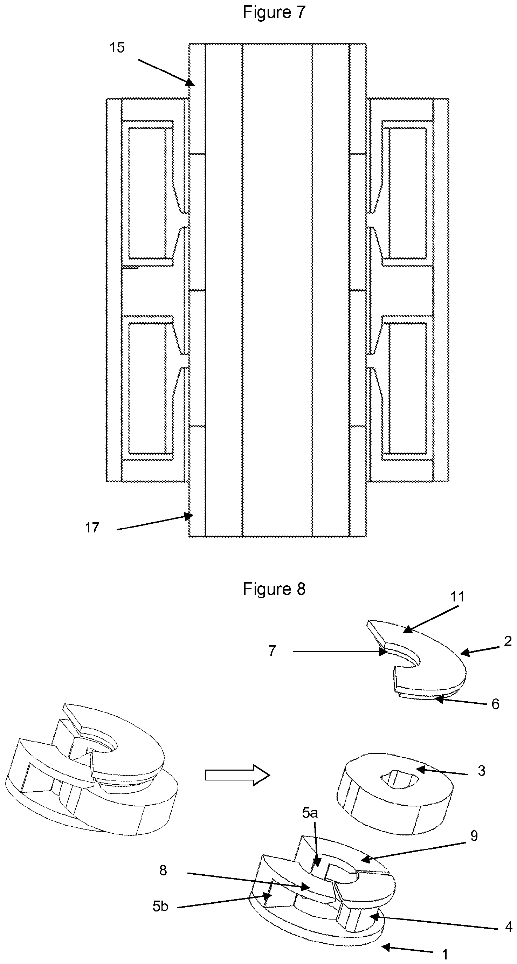

La figure 7 présente un mode de réalisation alternatif reprenant l'intégralité des éléments de l'actionneur de la figure 1 auquel on a ajouté deux aimants (15, 17) supplémentaires adjacents aux deux aimants (6, 7). Cet ajout permet de générer un facteur de force supplémentaire pour un courant donné sans modifier les avantages décrit précédemment qui constituent l'invention et qui permettent de dé-saturer le circuit, même si l'encombrement est globalement augmenté.

La figure 8 représente un autre mode de réalisation alternatif consistant à réaliser un actionneur à course angulaire. Sur la partie gauche, l'actionneur est montré en vue de trois-quart dessous et à droite ce même actionneur est montré en vue éclatée permettant de bien observer l'organe mobile (2) portant deux aimants minces (6, 7), l'organe mobile (2) se déplaçant en rotation relativement à la structure statorique (1) sur laquelle est placée ici une bobine (3) autour du pôle central (4). Les deux pôles latéraux (5a, 5b) présentent, de même que pour tout autre mode de réalisation de l'invention, les mêmes relations géométriques permettant de conserver une loi de force constante sur la course même à forte puissance.

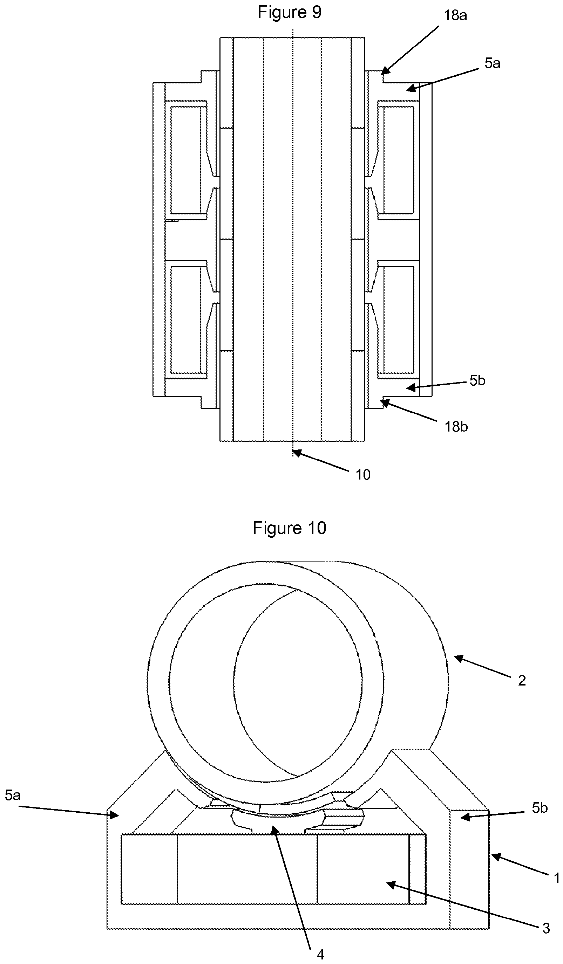

La figure 9 présente un mode de réalisation alternatif où la structure statorique (1) présente, au niveau des pôles latéraux (5a, 5b), des excroissances (18a, 18b) qui prolonge les pôles latéraux (5a, 5b) dans une direction opposée aux prolongements (8). Ces excroissances permettent de prendre en compte la tolérance de positionnement de l'organe mobile (2) par rapport à la structure statorique (1) en décalant la course Y d'un côté ou de l'autre suivant la direction de la course.

La figure 10 présente un mode de réalisation alternatif montrant un actionneur à géométrie périphérique, où l'on retrouve les mêmes éléments que décrits précédemment pour les autres modes de réalisation, notamment l'organe mobile (2) portant les aimants (6, 7) et la structure statorique (1) portant la bobine (3) et constituée d'un pôle central (4) et de deux pôles latéraux (5a, 5b) prolongés.

Selon cette géométrie, la structure statorique n'entoure pas totalement l'organe mobile (2), mais s'étend sur une partie seulement de sa surface tubulaire, pour former une « gouttière » s'étendant sur un tiers environ de la surface tubulaire de l'organe mobile.

### Revendications

1. Actionneur électromagnétique du type produisant un effort dû au courant sensiblement constant sur toute sa course utile Y, constitué d'au moins une structure statorique (1), au moins une bobine (3) d'alimentation électrique, et un organe mobile (2), ladite structure statorique (1) présentant, d'une part, un pôle central (4) s'étendant perpendiculairement à la direction de ladite course Y et ayant une largeur $Y_{C1}$ suivant la direction de la course et terminée à son extrémité par une largeur $Y_{C2}$ supérieure ou égale à la course Y de l'organe mobile (2), $Y_{C2}$ étant supérieure à $Y_{C1}$, et d'autre part, deux pôles latéraux (5a, 5b) ayant des largeurs $Y_{L1}$, suivant la direction de la course et terminée à leur extrémité par une largeur $Y_{L2}$ supérieure à $Y_{L1}$, les pôles latéraux (5a, 5b) et le pôle central (4) étant séparés par une distance $Y_G$, l'organe mobile (2) relativement à la structure statorique (1) comportant une armature (11) supportant au moins deux aimants permanents (6, 7) ayant chacun une largeur $Y_A$, l'organe mobile (2) et la structure statorique (1) délimitant un entrefer E, la bobine (3) ayant une largeur $Y_B$, **caractérisé en ce que** la largeur $Y_{L2}$ des pôles latéraux (8) est égale à $(2Y_{L1}+2Y_B+Y_{C1}-2Y_G-Y_{C2})/2$ et inférieure à la largeur $Y_{C2}$ du pôle central (4) et **en ce que** lesdits aimants permanents (6, 7) sont directement adjacents sans intervalle d'air ni de fer entre les surfaces frontales de deux aimants consécutifs, la largeur $Y_B$ de la bobine (3) est égale à la largeur $Y_A$ des aimants (6, 7) selon la direction de la course Y.

2. Actionneur selon la revendication 1 **caractérisé en ce que** la distance entre l'organe mobile (2) et la structure statorique (1) définit un jeu mécanique (j) et **en ce que** les pôles latéraux (5a, 5b) présentent une épaisseur variable, considérée perpendiculairement à la direction de la course Y, et **en ce que** ladite épaisseur, définie dans sa partie la plus fine (EP1), est de l'ordre de grandeur du jeu mécanique (j).

3. Actionneur selon la revendication 2 **caractérisé en ce que** l'épaisseur des pôles latéraux (5a, 5b), considérée perpendiculairement à la direction de la course Y et définie dans sa partie la plus épaisse (EP2), est au maximum égale à l'épaisseur (EpA) des aimants.

4. Actionneur selon l'une des revendications précédentes **caractérisé en ce que** les aimants (6, 7) présentent une aimantation dont la direction est majoritairement perpendiculaire à la direction de la course Y.

5. Actionneur selon la revendication précédente **caractérisé en ce que** les aimants (6, 7) présentent une aimantation dont la direction est perpendiculaire à la direction de la course Y sur la zone centrale des aimants (6, 7) et forme avec cette direction un angle non constante sur ses extrémités.

5

**6.** Actionneur selon la revendication précédente **caractérisé en ce que** l'armature (11) supporte quatre aimants (6, 7, 15, 17) adjacents.

**7.** Actionneur selon l'une des revendications précédentes **caractérisé en ce que** la course Y est circulaire.

**8.** Actionneur selon l'une des revendications 1 à 6 **caractérisé en ce que** la course est linéaire et la structure statorique (1) est constitué par un assemblage de tôles.

**9.** Actionneur selon l'une des revendications 1 à 6 **caractérisé en ce que** la course est linéaire et la structure statorique (1) et l'organe mobile (2) sont de révolution autour d'un axe colinéaire à la direction de la course Y.

**10.** Actionneur selon l'une des revendications précédentes **caractérisé en ce que** les pôles latéraux présentent des largeurs $Y_{L1}$ différentes.

**11.** Actionneur selon l'une des revendications précédentes **caractérisé en ce que** les pôles latéraux (5a, 5b) présentent des excroissances axiales (18a, 18b) dirigées à l'opposé des prolongements des pôles latéraux (5a, 5b).

**Patentansprüche**

**1.** Elektromagnetisches Stellglied, das aufgrund eines im wesentlichen konstanten Stroms auf seinen gesamten Nutzhub Y eine Kraft erzeugt, bestehend aus mindestens einer Statorstruktur (1), mindestens einer Stromversorgungsspule (3) und einem beweglichen Element (2), wobei die Statorstruktur (1) einerseits einen Mittelpol (4) aufweist, der sich senkrecht zur Richtung des Hubs Y des beweglichen Elements erstreckt, eine Breite YC1 in der Richtung des Hubs und an seinem Ende eine Breite YC2 größer / gleich dem Hub Y des beweglichen Elements (2) hat, wobei YC2 größer als YC1 ist, und andererseits zwei Seitenpole (5a, 5b) mit den Breiten YL1 in der Richtung des Hubs, und an ihrem Ende einer Breite YL2, die größer als YL1 ist, wobei die Seitenpole (5a, 5b) und der Mittelpol (4) in einem Abstand YG auseinanderliegen, das bewegliche Glied (2) in Bezug auf die Statorstruktur (1) einen Anker (11) umfasst, der mindestens zwei Dauermagneten (6, 7) mit jeweils einer Breite von YA trägt, das bewegliche Element (2) und die Statorstruktur (1) einen Luftspalt E begrenzen, und die Spule (3) eine Breite YB hat, **dadurch gekennzeichnet, dass** die Breite YL2 der Seitenpole (8) gleich (2YL1 + 2Ya + YC1 - 2YG - YC2)/2 und kleiner als die Breite YC2 des Mittelpols (4) ist, und dadurch dass die Dauermagnete (6, 7) direkt nebeneinander angeordnet sind, ohne Luftzwischenraum oder Luftspalt zwischen den Stirnflächen zweiter aufeinander folgender Magnete, wobei die Breite Ya der Spule (3) gleich der Breite YA der Magneten (6, 7) in der Richtung des Hubs Y ist.

**2.** Stellglied nach Anspruch 1, **dadurch gekennzeichnet, dass** der Abstand zwischen dem beweglichen Element (2) und der Statorstruktur (1) ein mechanisches Spiel (j) abgrenzt und dadurch, dass die Seitenpole (5a, 5b) senkrecht zur Richtung des Hubs Y betrachtet eine veränderliche Dicke aufweisen, und diese Dicke an ihrer schmalsten Stelle (EP1) so groß wie das mechanische Spiel (j) ist.

**3.** Stellglied nach Anspruch 3, **dadurch gekennzeichnet, dass** die senkrecht zur Richtung des Hubs Y betrachtete Dicke der Seitenpole (5a, 5b) an ihrer dicksten Stelle (EP2) höchstens gleich der Dicke (EpA) der Magnete ist.

**4.** Stellglied nach einem der vorhergehenden Ansprüche, **dadurch gekennzeichnet, dass** die Magnete (6, 7) eine Magnetisierung vorwiegend senkrecht zur Richtung des Hubs Y aufweisen.

**5.** Stellglied nach dem vorhergehenden Anspruch, **dadurch gekennzeichnet, dass** die Richtung der Magnetisierung der Magnete (6, 7) senkrecht zur Richtung des Hubs Y im Mittelbereich der Magnete (6, 7) verläuft und mit letzterer an den Enden einen nicht konstanten Winkel bildet.

**6.** Stellglied nach dem vorhergehenden Anspruch, **dadurch gekennzeichnet, dass** der Anker (11) vier nebeneinander angeordnete Magnete (6, 7, 15, 17) trägt.

**7.** Stellglied nach einem der vorhergehenden Ansprüche, **dadurch gekennzeichnet, dass** der Hub Y kreisförmig ist.

**8.** Stellglied nach einem der Ansprüche 1 bis 6, **dadurch gekennzeichnet, dass** der Hub linear ist und die Statorstruktur (1) aus einer Verbindung von Blechen besteht.

**9.** Stellglied nach einem der Ansprüche 1 bis 6, **dadurch gekennzeichnet, dass** der Hub linear ist und sich die Statorstruktur (1) und das bewegliche Element (2) um eine zur Richtung des Hubs Y kolineare Achse drehen.

**10.** Stellglied nach einem der vorhergehenden Ansprüche, **dadurch gekennzeichnet, dass** die Seitenpole unterschiedliche Breiten YL1 aufweisen.

**11.** Stellglied nach einem der vorhergehenden Ansprüche, **dadurch gekennzeichnet, dass** die Seitenpole (5a, 5b) axiale Erhebungen (18a, 18b) in entgegengesetzter Richtung der Verlängerungen der Seitenpole (5a, 5b) aufweisen.

## Claims

1. An electromagnetic actuator of the type producing a force due to the current that remains substantially constant over the entirety of its useful travel Y, consisting of at least one stator structure (1), at least one electrical supply coil (3), and a moving member (2), said stator structure (1) having, on the one hand, a central pole (4) running perpendicular to the direction of said travel Y and having a width $Y_{Ci}$ in the direction of the travel and terminating at its end in a width $Y_{C2}$ that is greater than or equal to the travel Y of the moving member (2), $Y_{C2}$ being greater than $Y_{ci}$, and on the other hand, two lateral poles (5a, 5b) having widths $Y_{L1}$, in the direction of the travel and terminating at their end in a width $Y_{L2}$ greater than $Y_{L1}$, the lateral poles (5a, 5b) and the central pole (4) being separated by a distance $Y_G$, the moving member (2) that is able to move relative to the stator structure (1) comprising an armature (11) supporting at least two permanent magnets (6, 7) each having a width $Y_A$, the moving member (2) and the stator structure (1) delimiting an air gap E, the coil (3) having a width $Y_B$, **characterized in that** the width $Y_{L2}$ of the lateral poles (8) is equal to $(2Y_{L1}+2Y_B+Y_{C1}-2Y_G-Y_{C2})/2$ and less than the width $Y_{C2}$ of the central pole (4) and **in that** said permanent magnets (6, 7) are directly adjacent, with no air gap or head gap between the front surfaces of two consecutive magnets, the width $Y_B$ of the coil (3) is equal to the width $Y_A$ of the magnets (6, 7) in the direction of the travel Y.

2. An actuator according to claim 1, **characterized in that** the distance between the moving member (2) and the stator structure (1) defines a mechanical clearance (j) and **in that** the lateral poles (5a, 5b) have a variable thickness, considered perpendicular to the direction of the travel Y, and **in that** said thickness, defined in its thinnest part (EP1), is of the order of magnitude of the mechanical clearance (j).

3. An actuator according to claim 2, **characterized in that** the thickness of the lateral poles (5a, 5b), considered perpendicular to the direction of the travel Y and defined in its thickest part (EP2), is at most equal to the thickness (EpA) of the magnets.

4. An actuator according to one of the preceding claims, **characterized in that** the magnets (6, 7) have a magnetization in a direction which is mainly perpendicular to the direction of the travel Y.

5. An actuator according to the preceding claim, **char-**

**acterized in that** the magnets (6, 7) have a magnetization in a direction which is perpendicular to the direction of the travel Y in the central zone of the magnets (6, 7) and forms with this direction a non-constant angle on its ends.

6. An actuator according to the preceding claim, **characterized in that** the armature (11) supports four adjacent magnets (6, 7, 15, 17).

7. An actuator according to one of the preceding claims, **characterized in that** the travel Y is circular.

8. An actuator according to one of claims 1 to 6, **characterized in that** the travel is linear and the stator structure (1) is composed of an assembly of sheet metal plates.

9. An actuator according to one of claims 1 to 6, **characterized in that** the travel is linear and the stator structure (1) and the moving member (2) are rotationally symmetrical about an axis collinear with the direction of the travel Y.

10. An actuator according to one of the preceding claims, **characterized in that** the lateral poles (5a, 5b) have different widths $Y_{L1}$.

11. An actuator according to one of the preceding claims, **characterized in that** the lateral poles (5a, 5b) have axial protrusions (18a, 18b) directed opposite the extensions of the lateral poles (5a, 5b).

## Figure 1

## Figure 2

## Figure 3

## Figure 4

## Figure 5

## Figure 6

## Figure 7

## Figure 8

## Figure 9

## Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 04195277 A
- WO 09016109 A1
- EP 00607354 B1
- US 2008220930 A
- US 2005242675 A
- US 4924123 A
- US 2004263003 A